# EUROPÄISCHE PATENTANMELDUNG

(11) **EP 1 653 103 A2**
(43) Veröffentlichungstag der Anmeldung: **03.05.2006**
(21) Anmeldenummer: 05022629.9
(22) Anmeldetag: 18.10.2005
(51) Int. Cl.: F16D 13/64

(54) **Kupplungsscheibenanordnung für eine Mehrscheibenkupplung**

(30) Priorität: 26.10.2004 DE 102004051910
(71) Anmelder: LuK Lamellen und Kupplungsbau Beteiligungs KG, 77813 Bühl (DE)
(72) Erfinder: Gerhardt, Friedrich, 77694 Kehl-Leutesheim (DE); Huber, Bernhard, 77876 Kappelrodeck (DE)

(57) **Zusammenfassung**

Kupplungsscheibenanordnung (1) für eine Mehrscheibenkupplung mit wenigstens zwei Reibbelaganordnungen (34) die jeweils mindestens zwei Rücken an Rücken angeordnete Reibbeläge (22,23) aufweisen und jeweils am Außenumfang eines Trägers (7) vorgesehen und mit diesem drehverbunden sind.

## Beschreibung

Die Erfindung betrifft eine Kupplungsscheibenanordnung für eine Mehrscheibenkupplung mit wenigstens zwei Reibbelaganordnungen, die jeweils mindestens zwei Rücken an Rücken angeordnete Reibbeläge aufweisen und jeweils am Außenumfang eines Trägers vorgesehen und mit diesem drehverbunden sind, wobei die Kupplungsscheibenanordnung weiterhin ein Nabenelement besitzt, das von einem radial verlaufenden Flansch umgriffen ist, der zwischen zwei beidseits desselben vorgesehenen Seitenscheiben angeordnet ist, wobei zumindest zwischen dem Flansch und den Seitenscheiben eine Drehschwingungsdämpfungseinrichtung vorhanden ist.

Derartige Kupplungsscheibenanordnungen sind beispielsweise durch die DE 199 63 023 A1 und die FR 26 28 492 A vorgeschlagen worden.

Der vorliegenden Erfindung lag die Aufgabe zugrunde, Kupplungsscheibenanordnungen gemäß der eingangs beschriebenen Art derart zu gestalten, dass diese einen einfachen, robusten Aufbau und eine vielseitige Einsetzbarkeit aufweisen. Weiterhin soll gewährleistet werden, dass Kupplungsaggregate, welche mit erfindungsgemäß ausgetalteten Kupplungsanordnungen versehen sind, eine einwandfreie Unterbrechung des Drehmomentes besitzen.

Erfindungsgemäß wird dies bei einer Kupplungsscheibenanordnung der eingangs beschriebenen Art unter anderem dadurch gelöst, dass beide Seitenscheiben mit jeweils einer der Reibbelaganordnungen drehverbunden sind, wobei die erste Reibbelaganordnung mittels zwischen deren beiden Reibbelägen angeordneten Trägersegmenten unmittelbar mit einer der Seitenscheiben drehverbunden ist und die zweite Reibbelaganordnung mittels zwischen deren Reibbelägen angeordneten Trägersegmenten mit einem ringförmigen Zwischenteil drehverbunden sind, welches über eine axiale Steckverbindung mit der zweiten Seitenscheibe drehfest, jedoch axial verlagerbar gekoppelt ist. Zweckmäßig kann es dabei sein, wenn die Steckverbindung im radial äußeren Bereich der entsprechenden Seitenscheibe vorgesehen ist. Zur Bildung der Steckverbindung kann wenigstens eines der beiden Teile, nämlich Zwischenteil und zweite Seitenscheibe, axiale Vorsprünge aufweisen, die in dazu korrespondierende Schlitze des anderen Bauteils eingreifen. In vorteilhafter Weise kann das ringförmige Zwischenteil auf der dem Flansch abgewandten Seite der zweiten Seitenscheibe angeordnet sein. Es sind jedoch auch Ausführungsformen denkbar, bei denen zumindest radiale Bereiche des ringförmigen Zwischenteils axial zwischen dem Flansch und der zweiten Seitenscheibe aufgenommen sind.

Zweckmäßig kann es weiterhin sein, wenn die Kupplungsscheibenanordnung innerhalb der Mehrscheibenkupplung derart verbaut ist, dass die von der ersten Seitenscheibe getragene Reibbelaganordnung mit einer Reibfläche des Schwungrades zusammenwirkt.

Der prinzipielle Aufbau von Mehrscheibenkupplungen, die in Zusammenhang mit erfindungsgemäß ausgestalteten Kupplungsscheibenanordnungen Verwendung finden können, sind beispielsweise durch die bereits vorerwähnten Schriften und die japanische Gebrauchsmuster-Offenlegungsschrift 61-156727 bekannt geworden.

Die axialen Vorsprünge des entsprechenden Bauteils können in einfacher Weise durch Einbringung von Schlitzen in einen ursprünglich rohrförmigen, axialen Bereich dieses Bauteiles gebildet werden. Zweckmäßig kann es jedoch auch sein, wenn zunächst am Außenumfang einer ebenen Blechplatine Zungen gebildet werden, die derart ausgestaltet sind, dass durch axiales Umlegen dieser Zungen bzw. des äußeren Randbereiches der Blechplatine die axialen Vorsprünge mit den dazwischen vorgesehenen Schlitzen entstehen.

Die Drehschwingungsdämpfungseinrichtung der Kupplungsscheibenanordnung kann in Umfangsrichtung bzw. tangentiale Richtung angeordnete Federn umfassen, welche in Aufnahmen, die beispielsweise durch fensterartige Ausschnitte gebildet sein können, des Flansches und der Seitenscheiben angeordnet sind und sich einer Relativverdrehung derselben widersetzen, wobei das die zweite Reibbelaganordnung tragende Zwischenteil einen die axialen Vorsprünge bildenden Bereich besitzt, von dem ein sich radial nach innen hin erstreckender Bereich ausgeht, der einen radial äußeren, ringförmigen Abschnitt zur Befestigung von Trägersegmenten aufweist und einen sich daran anschließenden, radial weiter innen liegenden Abschnitt, der gegenüber dem radial äußeren Abschnitt in axialer Richtung versetzt von der benachbarten Seitenscheibe weg verläuft und zumindest radial äußere Bereiche der Federn axial abdeckt bzw. übergreift.

Die zwischen den Reibbelägen der Reibbelaganordnungen vorgesehenen Trägersegmente können eine Belagfederung bilden, wodurch ein progressiver Aufbau und Abbau des von der Mehrscheibenkupplung übertragbaren Drehmomentes gewährleistet wird. Es kann also über einen bestimmten Betätigungsweg der Mehrscheibenkupplung das übertragbare Drehmoment dosiert werden.

Vorteilhaft kann es sein, wenn die zur Bildung der axialen Steckverbindung am ringförmigen Zwischenteil vorhandenen Profilierungen zumindest im Kontaktbereich mit den Gegenprofilierungen der Seitenscheibe eine höhere Härte besitzen als die Kontaktbereiche der Gegenprofilierungen.

Weitere konstruktive Merkmale sowie funktionelle Vorteile von erfindungsgemäßen Kupplungsscheibenanordnungen werden in Zusammenhang mit der nun folgenden Figurenbeschreibung näher erläutert.
- Figur 1: zeigt eine Kupplungsscheibenanordnung im Schnitt und
- Figur 2: eine möglich Ausbildung einer Belagfederung für die Kupplungsscheibenanordnung gemäß Figur 1.

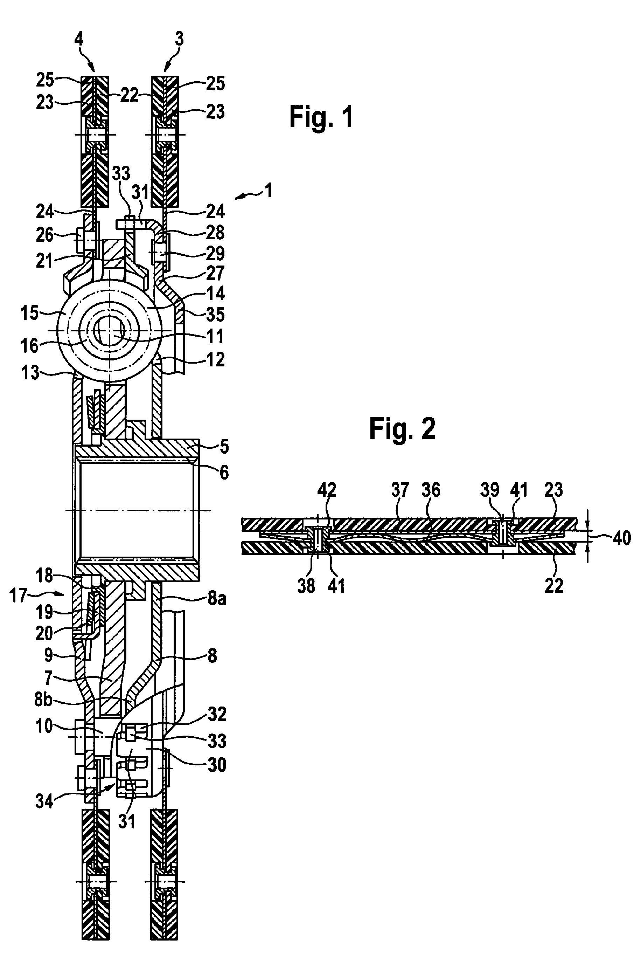

Die in Figur 1 dargestellte Kupplungsscheibenanordnung 1 mit zwei bezüglich der Drehmomentübertragung parallel geschalteten Reibbelaganordnungen 3, 4 kann verwendet werden mit Kupplungsaggregaten, wie sie beispielsweise durch die FR 2 628 492 A oder der Gebrauchsmuster-Offenlegungsschrift JP 61-156727 bekannt sind. Dabei kann das motorseitige Schwungrad, wie bei dem erwähnten Stand der Technik, durch ein einteiliges Schwungrad oder aber auch durch ein so genanntes Zweimassenschwungrad, welches zwei entgegen einer Dämpfungseinrichtung verdrehbare Trägheitsmassen besitzt, gebildet sein. Das Schwungrad kann dabei entweder unmittelbar mittels Schrauben an der Abtriebswelle des Motors verschraubt sein oder aber über eine so genannte Verbindungsscheibe mit einer solchen Welle verbunden werden. Derartige Verbindungsscheiben können unter anderem zur Isolation des Schwungrades gegen Axial- und Taumelschwingungen, die vom Motor angeregt werden, dienen.

Die Kupplungsscheibenanordnung 1 besitzt eine Nabe 5, welche hier eine Innenverzahnung 6 besitzt, über die sie beispielsweise mit einer Getriebeeingangswelle antriebsmäßig verbindbar ist. Die Nabe 5 trägt an ihrem Außenumfang einen scheibenförmigen Flansch 7, der hier drehstarr mit der Nabe 5 verbunden ist. Zwischen dem scheibenförmigen Flansch 7 und der Nabe 5 könnte jedoch auch zumindest ein so genannter Vor- bzw. Leerlaufdämpfer vorgesehen werden. Derartige Leerlaufdämpfer sind beispielsweise durch die DE 1801969 A1, die DE 1680669 A1, die DE 2814240 A1 und die DE 3442717 A1 bekannt geworden. Es wird daher bezüglich der möglichen Ausgestaltung derartiger Vordämpfer sowie der möglichen Anordnung der Energiespeicher und der diesen zugeordneten Reib- bzw. Hystereseeinrichtungen auf diesen Stand der Technik verwiesen.

Bei dem dargestellten Ausführungsbeispiel ist der Flansch 7 mit der Nabe 5 über eine Verzahnungsverbindung, kombiniert mit einer axialen Verstemmung, drehfest verbunden. Derartige Verbindungen sind beispielsweise durch die DE 3601903 A1 und die DE 2461566 A1 sowie den darin angegebenen Stand der Technik bekannt geworden.

Beidseits des Flansches 7 ist jeweils eine Deckscheibe bzw. Seitenscheibe 8, 9 vorgesehen, die axial miteinander verbunden sind. Bei dem dargestellten Ausführungsbeispiel erfolgt diese Verbindung mittels Nietbolzen 10. Der Flansch 7 und die Seitenscheiben 8, 9 besitzen Aufnahmen, die hier durch Fenster 11, 12, 13 gebildet sind, für die Energiespeicher 14. Der dargestellte Energiespeicher 14 besteht aus zwei ineinander geschachtelten Schraubenfedern 15, 16, welche sich einer Relativverdrehung der Seitenscheiben 8, 9 gegenüber dem Flansch 7 widersetzen. Axial zwischen dem Flansch 7 und wenigstens einer der Seitenscheiben 8, 9, hier der Seitenscheibe 9, sind Bestandteile einer Reibeinrichtung 17 angeordnet. Diese Bestandteile sind hier durch einen mit dem Flansch 7 in Reibverbindung stehenden Reibring 18, einer Anpressscheibe 19 sowie einen Energiespeicher in Form einer Tellerfeder 20 gebildet. Der Reibring 18 ist vorzugsweise drehfest mit der Anpressscheibe 19 gekoppelt, welche wiederum drehgekoppelt ist mit der Seitenscheibe 9, indem sie mit axialen Nasen in entsprechend angepasste Ausnehmungen dieser Seitenscheibe eingreift. Die Tellerfeder 20 ist axial zwischen der Seitenscheibe 9 und der Anpressscheibe 19 verspannt, wodurch die auf der anderen Seite des Flansches 7 angeordnete Seitenscheibe 8 axial in Richtung dieses Flansches 7 gezogen wird. Dies bewirkt bei dem dargestellten Ausführungsbeispiel, dass die Seitenscheibe 8 mit einem radial äußeren, ringförmigen Bereich 21 zur Erzeugung einer Reibungsdämpfung gegen den Flansch 7 verspannt wird. Obwohl der Bereich 21 unmittelbar am Flansch reibend anliegen kann, ist es vorteilhaft, wenn axial zwischen dem Bereich 21 und den gegenüberliegenden Bereichen des Flansches 7 zumindest sektorweise ein Reib- und/oder Gleitmaterial angeordnet ist. Dadurch kann eine definierte Reibungshysterese erzeugt werden.

Wie aus Figur 1 ersichtlich ist, trägt jede der Seitenscheiben 8, 9 eine der beiden Reibbelaganordnungen 3, 4.

Die Reibbelaganordnungen 3, 4 bestehen jeweils aus zwei Rücken an Rücken angeordneten Reibbelägen 22, 23, die vorzugsweise ringförmig ausgebildet sind. Axial zwischen den einander zugeordneten Reibbelägen 22, 23 ist eine so genannte Belagfederung 24 angeordnet, die in Figur 2 im entspannten Zustand dargestellt ist.

Die Belagfederungen 24 besitzen eine axiale Elastizität, so dass beim Schließen des mit der Kupplungsscheibenanordnung 1 ausgerüsteten Kupplungsaggregates die entsprechenden Reibbeläge 22, 23 entgegen der durch die Belagfederung 24 aufgebrachten Axialkraft aufeinander zu bewegt werden. Die Verwendung einer Belagfederung 24 zwischen den einander zugeordneten Reibbelägen 22, 23 ermöglicht über den Einrückweg bzw. Ausrückweg des Kupplungsaggregates einen progressiven bzw. allmählichen Drehmomentaufbau bzw. Drehmomentabbau. Dadurch wird eine weiche Betätigung der Kupplung ermöglicht. Die Belagfederungen 24 können durch eine so genannte Einfachsegmentbelagfederung oder durch eine so genannte Doppelsegmentbelagfederung gebildet sein. Einfachsegmentbelagfederungen sind beispielsweise durch die DE 893447 C, die DE 3712715 A1 und die DE 3618878 A1 bekannt geworden. Doppelsegmentbelagfederungen sind beispielsweise durch die DE 3631863 A1, die DE 2111892 A1 und die DE 1233669 C bekannt geworden.

Die zur Bildung der Belagfederung 24 verwendeten Segmente 25 der Reibbelaganordnung 4 sind unmittelbar drehfest mit der Seitenscheibe 9 verbunden, und zwar bei dem dargestellten Ausführungsbeispiel mittels Nietverbindungen 26. Die Segmente 25, welche die Belagfederung 24 der Reibbelaganordnung 3 bilden, sind indirekt mit der Seitenscheibe 8 drehgekoppelt, und zwar mittels eines ringförmigen Zwischenteils 27. Das ringförmige Zwischenteil 27 besitzt einen radial äußeren, ringförmigen Abschnitt 28, mit dem die Segmente 25 fest verbunden sind, und zwar ebenfalls über Nietverbindungen 29. Radial außen geht der ringförmige Abschnitt 28 in einen sich in Richtung der Seitenscheibe 8 erstreckenden, axialen Abschnitt 30 über, was insbesondere aus dem unteren Bereich der Figur 1 ersichtlich ist. Der axiale Abschnitt 30 bildet axiale Vorsprünge bzw. Zungen 31, zwischen denen schlitzförmige Ausschnitte 32 vorhanden sind. ln diese schlitzförmigen Ausschnitte 32 greifen Vorsprünge bzw. Zungen 33, die am Außenumfang der Seitenscheibe 8 angeformt sind. Die Zungen 33 erstrecken sich bei dem dargestellten Ausführungsbeispiel in radialer Richtung. Die Zungen 31 und 33 sowie die dazwischen vorgesehenen Ausschnitte sind derart aufeinander abgestimmt, dass das ringförmige Zwischenteil 27 gegenüber der Seitenscheibe 8 in einer zentrierten Position gehalten wird, wobei jedoch zumindest eine geringe Kippbewegung des Zwischenteils 27 in Bezug auf die Rotationsachse und somit auch der Reibbelaganordnung 3 gegenüber der Seitenscheibe 8 möglich ist. Die hier durch die zahnradartig ineinander greifenden Zungen 31 und 33 gebildete axiale Steckverbindung 34 gewährleistet eine drehfeste Koppelung mit axialer Verlagerungsmöglichkeit zwischen der Reibbelaganordnung 3 und der Seitenscheibe 8 und somit auch gegenüber der anderen Reibbelaganordnung 4.

Das ringförmige Zwischenteil 27 kann in einfacher Weise als Präge- bzw. Ziehteil aus Blechmaterial hergestellt werden. Die Schlitze 32 können erst nachdem der axiale Abschnitt 30 gebildet wurde, in diesen eingebracht werden. Zweckmäßig kann es jedoch auch sein, wenn, bevor der axiale Bereich 30 durch Umlegen von Material gebildet wird, bereits in das ebene Blechmaterial entsprechende Ausschnitte eingebracht werden, die derart ausgebildet sind, dass nach dem axialen Umlegen des Abschnittes 30 bzw. der Zungen 31 die auf die Flanken der Zungen 33 abgestimmten Schlitze 32 entstehen.

Wie insbesondere aus der oberen Hälfte der Figur 1 ersichtlich ist, umfasst das ringförmige Zwischenteil einen sich an den ringförmigen Abschnitt 28 radial innen anschließenden Abschnitt 35, der einen gebogenen Verlauf besitzt. Dieser Verlauf ist dabei derart ausgebildet, dass sich zumindest axial der ringförmige Abschnitt 35 in axialer Richtung vom Flansch 7 weg erstreckt und zumindest die radial äußeren Bereiche des Energiespeichers bzw. der Schraubenfeder 15 zumindest axial abdeckend umgreift. Wie aus der unteren Hälfte der Figur 1 erkennbar ist, besitzt auch die Seitenscheibe 8 einen radial inneren, ringförmigen Bereich 8a, der gegenüber dem äußeren, ringförmigen Bereich 8b, welcher die Zungen 33 trägt, axial vom Flansch 7 weg versetzt ist. In vorteilhafter Weise sind die radialen Abschnitte des ringförmigen Zwischenteils 27 und die radialen Bereiche der Seitenscheibe 8, welche sich - in axialer Richtung betrachtet - überdecken, derart ausgebildet, dass sie zumindest im Wesentlichen parallel zueinander verlaufen.

Alternativ zu der dargestellten Ausführungsform gemäß Figur 1 könnte auch die Seitenscheibe 8 axiale Zungen aufweisen, welche mit im Wesentlichen radial verlaufenden Zungen des ringförmigen Zwischenteils 27 zusammenwirken. Auch sind Ausgestaltungen möglich, bei denen die Zungen 33 und/oder die Zungen 31 in Bezug auf eine senkrecht zur Rotationsachse der Kupplungsscheibe 1 verlaufenden Ebene schräg verlaufen, zum Beispiel in einem Winkel von 30°, 60° oder 45°. Andere Winkel sind ebenfalls möglich. Wichtig ist dabei lediglich, dass die ineinander greifenden Bereiche des ringförmigen Zwischenteils 27 und der Seitenscheibe 8 die notwendige axiale Verlagerbarkeit und die Drehmomentübertragung gewährleisten.

Die erfindungsgemäße Ausgestaltung hat den Vorteil, dass die jeweils praktisch eine Verzahnung bildenden Zungen 31 und 33 in einfacher Weise mittels eines Stanzprozesses, der auch in ein Folgewerkzeug integriert sein kann, realisiert werden können. Zweckmäßig ist es, wenn zumindest die unmittelbar in Eingriff stehenden Bereiche der Zungen 31 und 33 gehärtet sind, zum Beispiel durch Einsatzhärten. Bei Verwendung von entsprechendem Stahl kann auch ein Induktivhärten zum Einsatz kommen.

Besonders zweckmäßig ist es, wenn die maximale Härte an den radialen Zungen 33 geringer ist als die vorhandene minimale Härte an den axialen Zungen 31. Dadurch können Einarbeitungen der radialen Zungen 33 bzw. der Radialverzahnung 33 in die axialen Zungen bzw. die Axialverzahnung 31 verhindert werden, wodurch eine einwandfreie axiale Verschiebbarkeit der Reibbelaganordnung bzw. der Belageinheit 3 gegenüber der Seitenscheibe 8 gewährleistet bleibt.

Wie bereits erwähnt, ist axial zwischen den einander zugeordneten Reibbelägen 22, 23 eine so genannte Belagfederung 24 angeordnet, die in Figur 2 im entspannten Zustand dargestellt ist.

Die ringförmigen Reibbeläge 22, 23 sind von in ringartiger Anordnung vorgesehenen, segmentförmigen Bauteilen 36 bzw. 37 getragen. Die Halterung der Reibbeläge 22, 23 mit den ihnen zugeordneten; als Träger dienenden, segmentförmigen Bauteilen 36 bzw. 37 erfolgt mittels Nietverbindungen 38 und 39.

Wie aus Figur 2 hervorgeht, sind die Niete 38, 39 bei dem dargestellten Ausführungsbeispiel derart ausgestaltet, dass sie im entspannten Zustand der Belagfederung 24 einen definierten Abstand 40 zwischen den Reibbelägen 22, 23 gewährleisten. Hierfür besitzen die Niete 38, 39 einerseits einen Belagbefestigungsbereich 41 zur Herstellung der Verbindung zwischen dem entsprechenden Belag und den zugeordneten, segmentförmigen Bauteilen sowie einen Abstützbereich 42, der die segmentförmigen Bauteile des anderen Reibbelages hintergreift. Durch eine derartige Ausgestaltung kann auch der Entspannungsweg der Belagfederung 24 begrenzt werden, so dass, falls erforderlich, auch im nicht belasteten Zustand der Reibbeläge die Belagfederung 24 zumindest eine geringe Vorspannung aufweisen kann. Letzteres ist jedoch nicht unbedingt erforderlich und es sind auch Ausführungsformen denkbar, bei denen durch entsprechende Ausbildung der die Reibbeläge tragenden Segmente die beschriebene Wegbegrenzung mittels Nietverbindungen nicht erforderlich ist.

Nietverbindungen zwischen Belagfedersegmenten und Reibbelägen sind beispielsweise durch die DE 2111892 A1, DE 2951573 A1 und DE 3712647 A1 bekannt geworden.

Aus Figur 2 ist zu entnehmen, dass bei dem dargestellten Ausführungsbeispiel lediglich die Belagträgersegmente 36 aufgrund ihrer Formgebung zur Bildung des durch die Belagfederung 24 gewährleisteten, axialen Federweges der beiden Reibbeläge 22, 23 aufeinander zu beitragen. Die Belagträgersegmente 37 sind bei dem Ausführungsbeispiel lediglich durch im Wesentlichen ebene Trägersegmente gebildet, die hier praktisch keine axiale Federung gewährleisten. Es sind jedoch auch Ausgestaltungen möglich, bei denen auch die segmentförmigen Bauteile 37 eine gewisse axiale Elastizität und somit Bewegbarkeit der Reibbeläge axial aufeinander zu ermöglichen. Dabei sollte jedoch vorzugsweise die Ausgestaltung der Belagträgersegmente derart erfolgen, dass die Segmente 36 eine größere axiale Bewegung der Reibbeläge als die Segmente 37 ermöglichen. Beispielsweise kann der durch die Segmente 37 gewährleistete Federweg lediglich 5 bis 40 % des durch die Segmente 36 ermöglichten Federweges betragen.

Die vor beschriebene Ausgestaltung der jeweils zwischen den Reibbelägen 22, 23 der Reibbelaganordnungen 3, 4 vorhandene Belagfederung 24 bzw. Trägersegmente 36, 37 gewährleistet, dass der Reibbelag 23 gegenüber der Seitenscheibe 9 bzw. dem Zwischenteil 27 praktisch keine oder aber eine wesentlich geringere axiale Verlagerbarkeit aufweist als der Reibbelag 22. Eine derartige Ausgestaltung gewährleistet, dass beim Öffnen des Kupplungsaggregates der Nabenkörper 5 auf der Getriebeeingangswelle praktisch keine bzw. nur eine sehr geringe, axiale Verlagerung erfährt. Der zum Trennen der Reibungskupplung notwendige gröβere Weganteil zwischen den Reibbelaganordnungen 3 und 4 erfolgt durch axiale Verlagerung der Reibbelaganordnung 3 bzw. des diese tragenden Zwischenteils 27 gegenüber den Seitenscheiben 8, 9.

Bei dem Ausführungsbeispiel sind zwei Gruppen von Belagträgersegmenten 36 und 37 vorgesehen, um zu gewährleisten, dass beim Komprimieren der entsprechenden Belagfederung 24 im Wesentlichen lediglich der Reibbelag 22 eine axiale Bewegung erfährt. Es sind jedoch auch Ausgestaltungen von Federsegmenten möglich, die durch Aufteilung in verschiedene Segmentzonen mit unterschiedlichen Federeigenschaften gewährleisten, dass beim axialen Zusammendrücken solcher Federsegmente einer der Beläge 22, 23 einen wesentlich größeren Weg zurücklegt als der andere Belag. Bei einer derartigen Ausgestaltung könnten also die Segmente 37 entfallen und beide Reibbeläge von den gleichen Federsegmenten getragen sein.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und den Figurenbeschreibungen sowie den Ansprüchen beschriebenen und in den Zeichnungen enthaltenen Merkmalen bzw. Elementen oder Verfahrensschritten gebildet werden können.

### Bezugszeichenliste

- 1: Kupplungsscheibenanordnung
- 2:
- 3: Reibbelaganordnung
- 4: Reibbelaganordnung
- 5: Nabe
- 6: Nabe
- 7: Flansch
- 8: Seitenscheibe
- 9: Seitenscheibe
- 10: Nietbolzen
- 11: Fenster
- 12: Fenster
- 13: Fenster
- 14: Energiespeicher
- 15: Schraubenfedern
- 16: Schraubenfedern
- 17: Reibeinrichtung
- 18: Reibring
- 19: Anpressscheibe
- 20: Tellerfeder
- 21: ringförmiger Bereich
- 22: Reibbeläge
- 23: Reibbeläge
- 24: Belagfederung
- 25: Segmente
- 26: Nietverbindung
- 27: ringförmiges Zwischenteil
- 28: ringförmiger Abschnitt
- 29: Nietverbindungen
- 30: axialer Abschnitt
- 31: axiale Zungen/Axialverzahnung
- 32: schlitzförmige Ausschnitte
- 33: radiale Zungen/Radialverzahnung
- 34: axiale Steckverbindung
- 35: ringförmiger Abschnitt
- 36: segmentförmige Bauteile
- 37: segmentförmige Bauteile
- 38: Nietverbindung
- 39: Nietverbindung
- 40: Abstand
- 41: Belagbefestigungsbereich
- 42: Abstützbereich

## Patentansprüche

1. Kupplungsscheibenanordnung für eine Mehrscheibenkupplung mit wenigstens zwei Reibbelaganordnungen, die jeweils mindestens zwei Rücken an Rücken angeordnete Reibbeläge aufweisen und jeweils am Außenumfang eines Trägers vorgesehen und mit diesem drehverbunden sind, weiterhin mit einem Nabenelement und einem dieses umgebenden, radialen Flansch, der zwischen zwei beidseits desselben vorgesehenen Seitenscheiben angeordnet ist, wobei zumindest zwischen dem Flansch und den Seitenscheiben eine Drehschwingungsdämpfungseinrichtung vorgesehen ist, **dadurch gekennzeichnet, dass** beide Seitenscheiben mit jeweils einer der Reibbelaganordnungen drehverbunden sind, wobei die erste Reibbelaganordnung mittels zwischen deren beiden Reibbelägen angeordneten Trägersegmenten unmittelbar mit einer der Seitenscheiben drehverbunden ist und die zweite Reibbelaganordnung mittels zwischen deren Reibbelägen angeordneten Trägersegmenten mit einem ringförmigen Zwischenteil drehverbunden sind, welches über eine axiale Steckverbindung mit der zweiten Seitenscheibe drehfest, jedoch axial verlagerbar gekoppelt ist.

2. Kupplungsscheibenanordnung nach Anspruch 1, **dadurch gekennzeichnet, dass** wenigstens eines der beiden Teile, nämlich Zwischenteil und zweite Seitenscheibe, axiale Vorsprünge aufweist, die in dazu korrespondierenden Schlitzen des anderen Bauteils eingreifen.

3. Kupplungsscheibenanordnung nach Anspruch 1 oder 2, **dadurch gekennzeichnet, dass** das Bauteil mit den axialen Vorsprüngen einen ursprünglich rohrförmigen, axialen Bereich besitzt, in den zur Bildung der Vorsprünge Schlitze eingebracht sind.

4. Kupplungsscheibenanordnung nach einem der Ansprüche 1 bis 3, **dadurch gekennzeichnet, dass** die Drehschwingungsdämpfungseinrichtung in Umfangsrichtung oder tangential angeordnete Federn umfasst, welche in Aufnahmen des Flansches und der Seitenscheiben angeordnet sind und sich einer Relativverdrehung derselben widersetzen, wobei das Zwischenteil einen die axialen Vorsprünge bildenden Bereich besitzt, von dem ein sich radial nach innen hin erstreckender Bereich aufgeht, der einen radial äußeren, ringförmigen Abschnitt zur Befestigung von Trägersegmenten aufweist und einen sich daran anschließenden, radial weiter innen liegenden Abschnitt, der gegenüber dem radial äußeren Abschnitt in axialer Richtung versetzt von der benachbarten Seitenscheibe weg verläuft und zumindest radial äußere Bereiche der Federn axial abdeckt.

5. Kupplungsscheibenanordnung nach einem der Ansprüche 1 bis 4, **dadurch gekennzeichnet, dass** die zwischen den Reibbelägen der Reibbelaganordnungen vorgesehenen Trägersegmente eine Belagfederung bilden.

6. Kupplungsscheibenanordnung nach einem der Ansprüche 1 bis 5, **dadurch gekennzeichnet, dass** die zur Bildung der axialen Steckverbindung am ringförmigen Zwischenteil vorhandenen Profilierungen zumindest im Kontaktbereich mit den Gegenprofilierungen der Seitenscheibe eine höhere Härte besitzen als die Kontaktbereiche der Gegenprofilierungen.
